# DEMANDE DE BREVET EUROPEEN

(11) **EP 1 389 578 A1**
(43) Date de publication de la demande: **18.02.2004**
(21) Numéro de dépôt: 03360094.1
(22) Date de dépôt: 11.08.2003
(51) Int. Cl.: B62K 27/12, B62K 13/02

(54) **Fourche avant de bicyclette avec dispositif d'adaptation de sa géométrie à usage de tandem à trois roues**

(30) Priorité: 13.08.2002 FR 0210238
(71) Demandeur: Sonnefraud, Jean-Claude, 67118 Geispolsheim (FR); Sonnefraud, Gilberte, 67118 Geispolsheim (FR)
(72) Inventeur: Sonnefraud, Jean-Claude, 67118 Geispolsheim (FR)

(57) **Abrégé**

L'invention a trait au domaine du cyclisme et notamment aux dispositifs qui, intégrés à l'équipement de base de la fourche avant d'une première bicyclette, permettent de l'atteler à une seconde bicyclette afin que l'ensemble constitue un tandem à trois roues.

Sa stabilité est obtenue grâce à un second pivot (13) dont l'axe a une direction distincte de celle de l'axe du pivot (21) de la colonne de direction de la bicyclette, les moyens (22, 23, 24) empêchant la rotation du pivot (13) lorsque la bicyclette est individuelle ou empêchant la rotation du pivot (21) lorsque la bicyclette constitue la section arrière du tandem.

Ce dispositif est remarquable en ce qu'il rend le tandem stable à partir de moyens simples dépourvus de réglages.

## Description

La présente invention a trait au domaine du cyclisme et notamment aux dispositifs qui, intégrés à l'équipement de base d'une première bicyclette, permettent de l'atteler à une seconde bicyclette afin que l'ensemble constitue un tandem à trois roues.

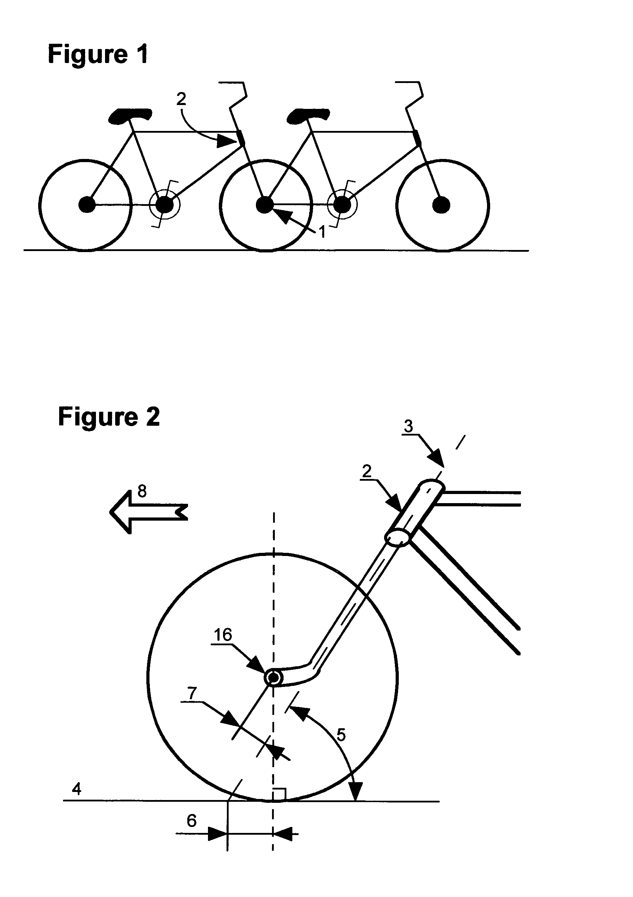

La figure 1 représente un tandem à trois roues obtenu en raccordant les extrémités de la fourche avant d'une première bicyclette (dont la roue a préalablement été retirée), à l'axe (1) de la roue arrière d'une seconde bicyclette, l'ensemble formant un véhicule à trois roues dont les sections avant et arrière s'articulent, d'une part dans le plan vertical, par un pivot rapporté sur l'axe (1) de la roue centrale du véhicule et d'autre part, dans le plan horizontal, par le pivot déjà disponible formé par le tube de direction (2) de la section arrière.

L'art antérieur propose plusieurs dispositifs d'attelage de deux bicyclettes pour former un tandem à trois roues. Ils retiennent en commun le principe d'articulation du tandem dans le plan horizontal utilisant le pivot formé par la colonne de direction de la section arrière. S'agissant des organes de raccordement ainsi que de l'articulation dans le plan vertical, on peut citer les dispositifs décrits dans les brevets suivants:

Le brevet WO9509761 décrit un dispositif de raccordement de la bicyclette servant de section arrière au tandem, ledit dispositif s'adaptant à la fourche de la bicyclette. Chacun des bras de ladite fourche est raccordé par le dispositif à un pivot rapporté sur le cadre de la bicyclette servant de section avant, à proximité de l'axe de sa roue arrière.

Le brevet US5372371 évoque un tandem dont les sections avant et arrière sont articulées autour de l'axe même de la roue centrale du tandem à l'aide d'une fourche spécifique dont chaque bras est raccordé sur un pivot rapporté de part et d'autre dans le prolongement des extrémités dudit axe.

Le brevet GB2287437 propose d'équiper la fourche traditionnelle d'une première bicyclette servant de section arrière au tandem, avec des dispositifs permettant le raccordement facilement démontable de cette bicyclette sur les extrémités de l'axe de la roue arrière d'une seconde bicyclette, lesdites extrémités supportant des pivots rapportés.

Le brevet FR2819777 met en oeuvre une fourche spécifique comportant des moyens permettant, sans outillage spécifique, d'ajuster l'écartement des extrémités de ses bras munies de pivots, pour les raccorder d'une part, sur les extrémités de l'axe généralement court d'une roue avant de bicyclette lorsque celle-ci est utilisée de manière autonome, ou, d'autre part, sur les extrémités de l'axe arrière généralement plus long d'une autre bicyclette, de sorte à ce que l'ensemble forme un tandem à trois roues.

Aucun des brevets cités ci-dessus n'apporte de solution aux réels problèmes de stabilité rencontrés lors de la conduite du tandem à trois roues obtenu par de tels assemblages, lesquels utilisent le pivot de la colonne de direction de la section arrière comme articulation centrale du tandem.

Il en est autrement du brevet US4458908 qui introduit une notion de tolérance au roulis entre les deux sections du tandem à trois roues. L'invention permet de contrôler le roulis et de maintenir ainsi la stabilité du véhicule au prix d'une mécanique extrêmement complexe nécessitant de nombreux réglages en fonction de la géométrie des bicyclettes et de la morphologie des cyclistes qui propulsent le tandem.

De même, dans le but d'accroître la stabilité du tandem à trois roues par rapport au roulis, le brevet US5522610 propose quant à lui d'équiper la bicyclette de la section arrière avec une fourche de conception simple, ayant la particularité de posséder sur chacun de ses bras, un dispositif élastique permettant d'absorber et de contrôler les efforts de torsion induits sur les moyens d'accouplement des deux sections du tandem lorsque celui-ci est en virage. Ces efforts, qui produiraient une perte de stabilité du véhicule, sont partiellement absorbés par le dispositif. Néanmoins, outre la nécessité d'adapter les éléments élastiques aux caractéristiques de chaque tandem et au poids des cyclistes, la présence des dispositifs entrave la stabilité de la bicyclette lorsque celle-ci est destinée à circuler de manière autonome. En cas de gène, l'inventeur préconise de les rendre escamotables, ce qui limite le caractère réversible de l'utilisation de la bicyclette supportant l'invention.

D'autre part, quels que soient les dispositifs décrits dans les brevets cités, le cycliste de la section arrière peu agir sur la stabilité directionnelle du tandem avec l'effort qu'il exerce sur son guidon, lequel est transmis par la fourche à l'axe de la roue centrale du tandem, provocant ainsi un mouvement de roulis d'une section par rapport à l'autre. Cet inconvénient, également identifié dans le brevet US5522610 comme étant l'apanage des fourches rigides, est totalement effacé avec le dispositif objet de la présente invention.

L'instabilité intrinsèque du tandem à trois roues assemblé à partir de deux bicyclettes traditionnelles trouve son origine dans les dispositions particulières prises quant à la géométrie de la direction de la bicyclette utilisée comme section arrière dudit tandem.

Les caractéristiques de géométrie d'une bicyclette individuelle dépendent de l'usage qui en est prévu, en particulier du confort de conduite souhaité. Celles valables pour la bicyclette individuelle sont incompatibles avec son utilisation en tant que section arrière d'un tandem à trois roues.

Le dispositif objet de la présente invention, permet d'adapter les caractéristiques de géométrie de la direction d'une bicyclette qu'elle soit utilisée individuellement ou en association avec une autre bicyclette pour former un tandem à trois roues.

D'autre part, pour obtenir un véhicule stable quelle que soit la morphologiques des cyclistes qui l'animent, la présente invention fait abstraction de tous compromis tels ceux permis par des éléments élastiques mis en oeuvre avec les dispositifs décrits dans les brevets US4458908 et US5522610. Ainsi, les performances de stabilité sont équivalentes quel que soit le mode d'utilisation de la bicyclette retenu et le maintien de la stabilité ne requiert pas de phase d'apprentissage de la part des cyclistes.

En effet, l'invention s'appuie sur la connaissance des principes de stabilité d'une bicyclette traditionnelle, lesquels reposent sur l'emploi d'une géométrie particulière des éléments de sa direction.

La figure 2 illustre quelques notions fondamentales qui interviennent dans la définition des critères de stabilité d'une bicyclette traditionnelle, notamment :
- Le sens de déplacement (8) de la bicyclette qui détermine la position géométrique des éléments définis ci-après.
- L'axe de la colonne de direction (3), ou axe de direction, est représenté par la droite passant par le tube de direction (2) lui-même solidaire du cadre de la bicyclette. Ladite droite coupe le plan du sol (4) en formant un angle (5) appelé angle de direction, généralement de l'ordre de 70 degrés.
- La chasse (6) est la distance séparant les points d'intersection sur le plan du sol de deux droites, la première étant l'axe de direction (3), la seconde étant la perpendiculaire à la ligne du sol passant par l'axe (16) de la roue.
- Le déport (7) est la distance séparant l'axe (16) de la roue de l'axe de direction (3), ladite distance étant mesurée sur la perpendiculaire à l'axe de direction (3) passant par l'axe (16) de la roue.

La stabilité requise détermine le choix des paramètres chasse et déport ainsi que celui de l'angle de direction en tenant compte de la géométrie du cadre et de la taille des roues de la bicyclette individuelle. Une bicyclette de cyclotourisme à usage urbain sera beaucoup plus stable qu'une bicyclette de trial nécessitant une forte maniabilité sur terrain accidenté.

Dans le cas du tandem à trois roues, la bicyclette utilisée en tant que section arrière devient une remorque de la section avant et ne nécessite de ce fait aucun pré-requis en matière de stabilité propre.

En effet, en présence d'une géométrie traditionnelle sur l'articulation entre les sections du tandem à trois roues, lorsque celui-ci tourne dans un virage, la section arrière s'articule dans le plan horizontal par rapport à sa section avant autour de l'axe (3) passant par le tube de direction (2), lui-même incliné par rapport au plan du sol de la valeur correspondant à l'angle de direction (5) retenu pour la bicyclette traditionnelle utilisée en tant que section arrière.

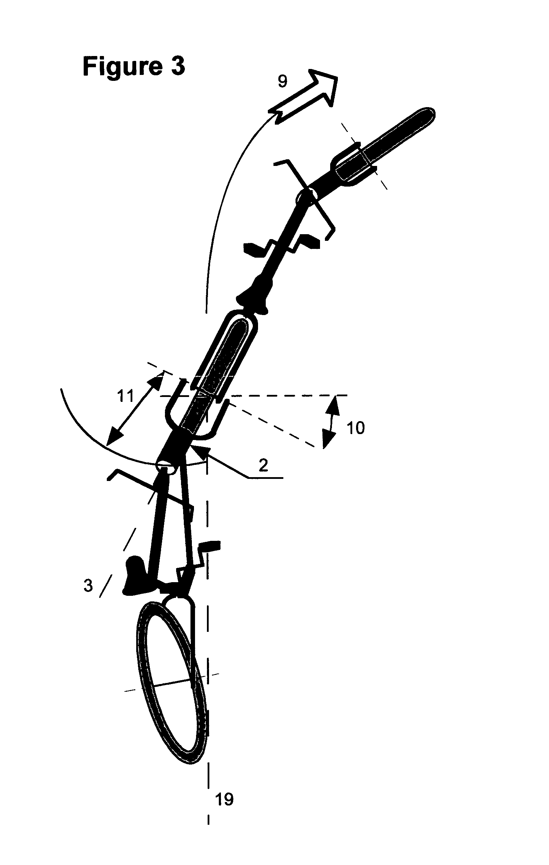

La figure 3 illustre ce fonctionnement en représentant schématiquement le tandem vu de dessus, virant à droite selon la trajectoire (9). La fourche de la bicyclette de section arrière a tourné d'un angle (10) par rapport à la ligne de roulement (19) de cette bicyclette, forçant celle-ci à trouver un équilibre isostatique sur le plan du sol. Cet équilibre est obtenu par déformation de la structure du tandem au niveau de ses articulations centrales. En effet, l'axe de la colonne de direction (3) évolue sur la génératrice d'un tronc de cône (11) dont l'ouverture minimale correspondant à l'angle de direction (5), croît fortement avec l'angle que forment, entre elles, les deux sections du tandem. Le cadre de la bicyclette et le cycliste de la section arrière s'inclinent dans le sens opposé à celui du virage, s'opposant ainsi à l'inclinaison naturelle du tandem vers le centre dudit virage lorsqu'une vitesse de locomotion suffisante est atteinte.

De ce fait, le mouvement de virage du tandem est transformé en roulis avec pour conséquence, une instabilité du véhicule entraînant la chute des cyclistes lorsque le point d'inclinaison de non-retour est atteint.

Le dispositif objet de la présente invention provoque l'inclinaison dans le même sens des sections avant et arrière du tandem, éliminant ainsi le roulis dans les virages. La section arrière se comporte telle une remorque tractée par l'axe, ou poussant l'axe de la roue centrale du tandem sans lui infliger d'effort de roulis, la structure du tandem n'étant pas déformée.

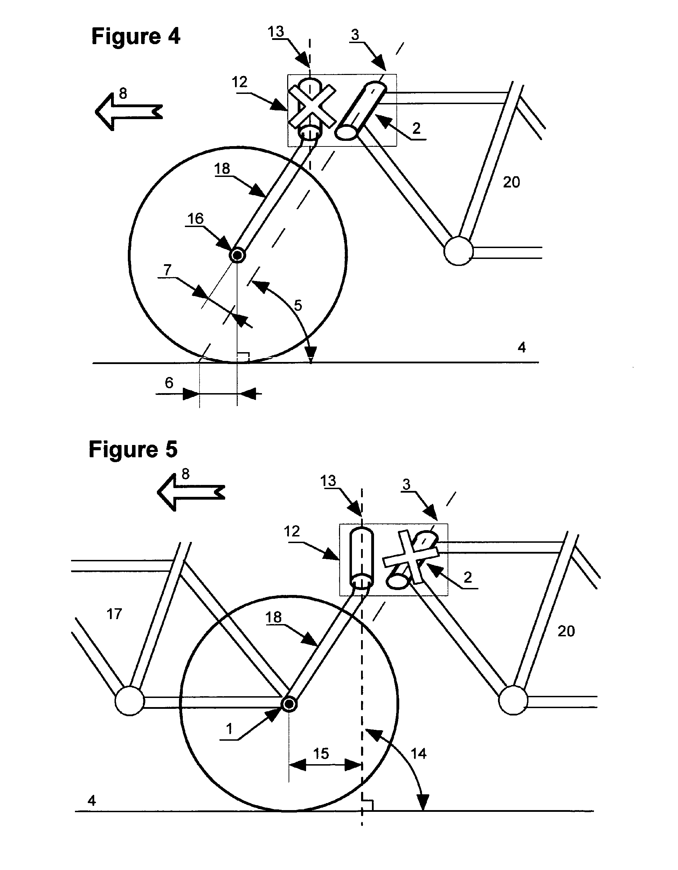

Les figures 4 et 5 schématisent le principe du dispositif permettant d'obtenir une parfaite stabilité du tandem à trois roues, la figure 4 illustrant le dispositif dans un contexte d'utilisation individuelle de la bicyclette qui en est équipée, la figure 5 plaçant le dispositif en situation dans laquelle la bicyclette devient la section arrière d'un tandem à trois roues, figures dans lesquelles :

(12) représente la tête de la fourche équipée du dispositif objet de l'invention et prolongée par les deux bras (18).

Les bras (18) supportent l'axe (16) de la roue avant de la bicyclette individuelle (figure 4) ou sont articulés dans le plan vertical sur chacune des extrémités de l'axe (1) de la roue centrale du tandem (figure 5).

(3) et (5) représentent respectivement l'axe et l'angle de direction de la bicyclette individuelle déterminés par la position du tube de direction (2).

(13) représente l'axe du pivot d'articulation supplémentaire introduit par le dispositif. Cet axe forme un angle (14) généralement droit avec le plan du sol (4).

(6) et (7) représentent respectivement la chasse et le déport de la roue avant de la bicyclette individuelle.

(15) est le nouveau déport de l'axe (13) du pivot supplémentaire par rapport à l'axe (1) de la roue centrale du tandem.

(17) et (20) sont des vues partielles des cadres des bicyclettes servant respectivement de section avant et arrière au tandem.

(4) représente le plan de roulement des véhicules qui évoluent dans la direction (8).

La tête de fourche (12) comporte un pivot d'articulation (13) généralement perpendiculaire par rapport au plan de roulement (4) et supplémentaire par rapport à celui déjà disponible dans le tube de direction (2) de la bicyclette faisant office de section arrière du tandem. Un sélecteur mécanique permet d'activer l'un ou l'autre des pivots de la fourche selon l'usage qui est fait de la bicyclette, c'est à dire, dans un premier cas d'usage individuel de la bicyclette tel que représenté en figure 4, immobiliser le pivot d'axe (13) et libérer le pivot d'axe (3) formé dans le tube de direction (2). Dans un second cas d'usage représenté figure 5, la bicyclette constitue la section arrière d'un tandem à trois roues. Le sélecteur libère le pivot dont l'axe (13) est perpendiculaire au plan de roulement et immobilise le pivot d'axe (3) ainsi que le guidon par rapport au cadre de la bicyclette formant la section arrière dudit tandem.

Ainsi, pour résoudre les problèmes de stabilité rencontrés lors de la conduite d'un tandem à trois roues obtenu en raccordant les bras de la fourche avant d'une première bicyclette aux extrémités de l'axe de la roue arrière d'une seconde bicyclette, la présente invention introduit dans la tête de la fourche de la bicyclette utilisée comme section arrière du tandem, un dispositif permettant, de manière réversible grâce à un sélecteur, de basculer d'une géométrie traditionnelle de la direction vers une géométrie compatible avec l'usage de la bicyclette concernée en tant que section arrière d'un tandem à trois roues. Dans ce dernier cas, le dispositif redresse à la normale l'angle du pivot de la colonne de direction de la section arrière, évitant ainsi l'effet de roulis infligé entre les sections du tandem lorsque celui-ci entre en virage. Ce même dispositif immobilise le guidon de la section arrière du tandem par rapport à son cadre, contribuant ainsi à accroître la stabilité du véhicule par rapport aux efforts que le cycliste arrière peut exercer sur son guidon, lesquels efforts ne sont plus transmis à l'articulation centrale du tandem. La géométrie traditionnelle est retrouvée lorsque le sélecteur inclus au dispositif est remis en position permettant l'usage individuel de la bicyclette qui en est équipée. La caractéristique de cette géométrie originelle n'est nullement affectée par la présence des équipements qui permettent l'usage de la bicyclette comme section arrière d'un tandem.

Pour un usage plus spécifique, uniquement dédiée à être associée à une bicyclette traditionnelle pour former un tandem à trois roues, la section arrière de ce tandem peut comporter une tête de fourche simplifiée en ce que le pivot de la colonne de direction traditionnelle est supprimé ainsi que le dispositif sélecteur permettant d'activer l'une ou l'autre géométrie de direction dont seule celle compatible avec l'usage pour tandem à trois roues est conservée. Cette version plus économique présente les mêmes avantages fonctionnels que son homologue bi-usages dont elle est dérivée.

L'invention concerne de façon générale un ensemble comprenant une fourche support de la roue avant d'une bicyclette et un dispositif de liaison de la fourche au cadre de la bicyclette, caractérisé en ce que le dispositif de liaison comporte :
un premier pivot (21), ou colonne de direction, pour l'utilisation de la bicyclette de façon indépendante d'une autre bicyclette, l'axe de ce premier pivot constituant l'axe de rotation du guidon de la bicyclette,
un second pivot (13) dont l'axe a une direction distincte de la direction de l'axe du premier pivot et qui est mis en action quand la fourche est associée à la roue arrière d'une autre bicyclette, et
des moyens (22, 23, 24, 28) pour, d'une part, empêcher la rotation du second pivot quand la bicyclette est utilisée indépendamment d'une autre bicyclette et pour, d'autre part, empêcher la rotation du premier pivot quand la fourche est associée à la roue arrière d'une autre bicyclette.

L'axe du second pivot de cet ensemble est sensiblement vertical alors que l'axe du premier pivot forme un angle d'environ 70 degrés avec la direction horizontale.

Les moyens mis en oeuvre pour empêcher la rotation du premier pivot ou du second pivot comportent une came ou un pêne susceptible de prendre deux positions, la première pour empêcher la rotation du premier pivot et la seconde pour empêcher la rotation du second pivot.

D'autre part, la came (22) ou le pêne, est solidaire d'un organe (27) fixé au premier pivot et formant palier pour le second pivot, et cette came ou ce pêne coopère avec des ouvertures ou gâches prévues, d'une part, dans un élément solidaire du palier du premier pivot et, d'autre part, dans un élément solidaire du second pivot.

Les deux positions de la came forment entre elles un angle d'environ 180 degrés.

Un élément de commande (28) ou sélecteur présentant deux positions indexées permet de commander la position de la came ou du pêne.

L'ensemble ainsi décrit fait partie intégrante d'une bicyclette individuelle.

Un appareil de locomotion du type tandem à trois roues est obtenu par association d'une bicyclette avant avec une bicyclette arrière comportant l'ensemble ainsi décrit mais dépourvue de roue avant.

Pour un usage plus spécifique, un accessoire formant cycle arrière pour appareil de locomotion du type tandem à trois roues est envisagé, ce tandem comprenant une bicyclette avant et un cycle arrière dépourvu de roue avant mais comportant une fourche avant associée à l'axe de la roue arrière de la bicyclette avant, caractérisé en ce que le cycle arrière comprend une fourche support de la roue avant qui est reliée au cadre par l'intermédiaire d'un pivot de direction sensiblement verticale, le guidon de ce cycle arrière gardant une direction fixe par rapport au cadre.

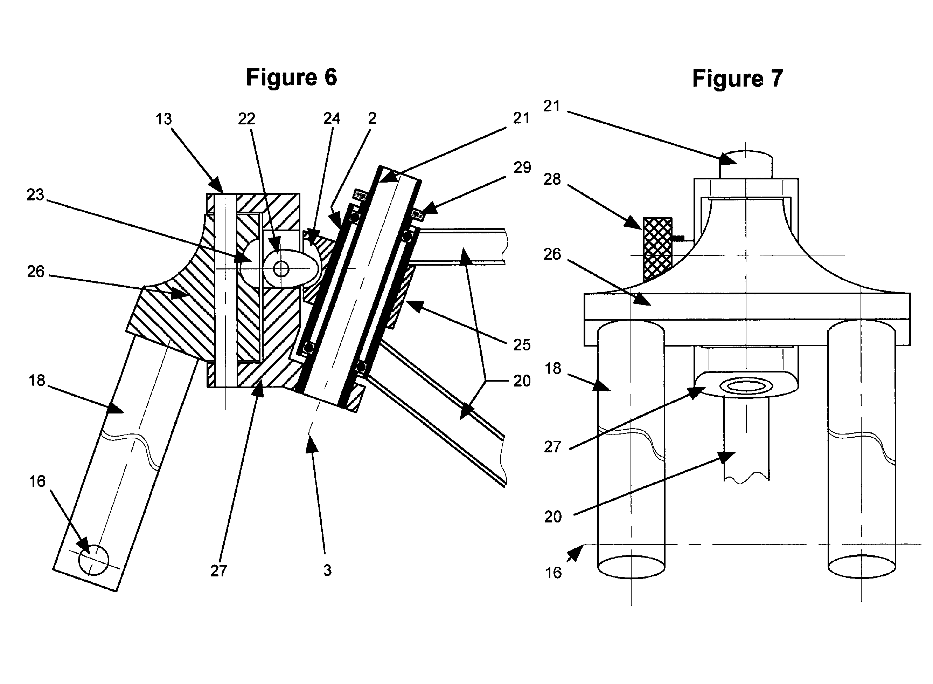

La description détaillée qui suit donne à titre d'exemple non limitatif et en regard des figures 6 et 7 un mode de réalisation d'un ensemble reprenant les principes évoqués pour un fonctionnement bi-modes de la bicyclette formant la section arrière du tandem à trois roues.

Les bras (18) de la fourche sont solidaires du corps de pivot (26) dont l'axe (13) est perpendiculaire par rapport au plan de roulement de la bicyclette.

Le châssis (27) support du tube de fourche (21) forme une chape pour le pivot (13) avec un angle de l'ordre de 20 degrés entre les axes du tube de fourche et du pivot, la valeur de cet angle variant légèrement selon les caractéristiques de stabilité des bicyclettes auxquelles la fourche est raccordée.

Le tube de fourche est représenté monté dans le tube de direction (2) de la bicyclette d'accueil avec sa paire de roulements et son écrou de serrage (29), lequel tube de direction est muni de la bague (25) rapportée sur ledit tube ou avantageusement intégrée au tube lors de l'assemblage du cadre (20) de la bicyclette.

Le verrouillage de l'une ou de l'autre articulation est obtenu par l'organe déplaçable (22), ici une came dont l'axe supporté par le châssis (27) permet sa rotation sur 180 degrés. Selon la représentation de la figure 6, la came qui plonge dans la gâche (24) de la bague (25) immobilise l'articulation de la colonne de direction et libère le pivot d'axe vertical (13), autorisant ainsi l'usage de la bicyclette en tant que section arrière d'un tandem à trois roues. D'autre part, lorsque la came (22) plonge à l'opposé dans la gâche (23) formée dans le corps du pivot (26), l'articulation d'axe vertical (13) est immobilisée. L'articulation formée par la colonne de direction de la bicyclette est libérée autorisant ainsi l'usage individuel de ladite bicyclette alors équipée de sa roue avant.

L'organe de manoeuvre (28) visible sur la figure 7, par exemple un bouton indexé, permet au cycliste d'actionner l'organe déplaçable (22), une came dans la présente description et d'en verrouiller la position grâce à l'indexage.

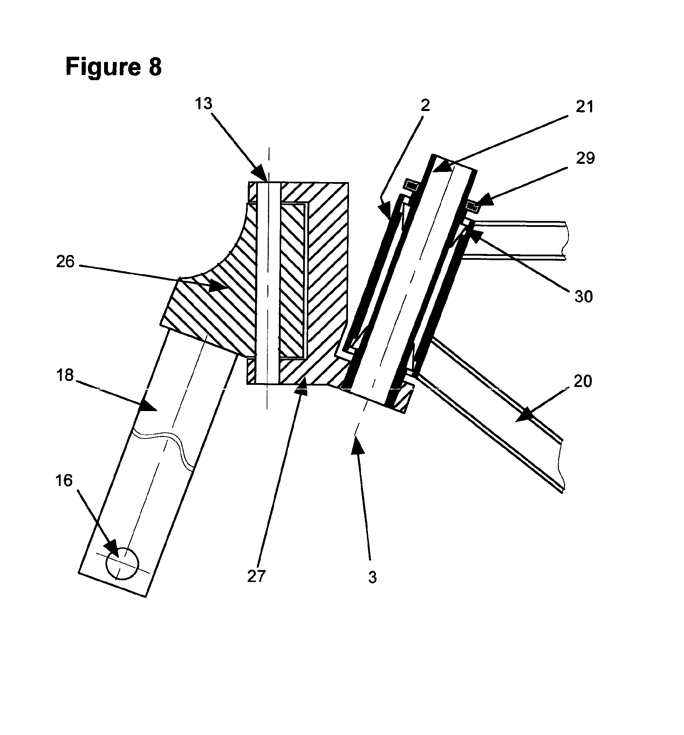

La figure 8 illustre à titre d'exemple non limitatif, le mode de réalisation d'un ensemble simplifié à partir de la version précédemment décrite, lequel est destiné à transformer une bicyclette traditionnelle pour la destiner à un usage exclusif de section arrière d'un tandem à trois roues.

Le tube de fourche (21) dans lequel est monté le guidon de la bicyclette, est lui-même immobilisé dans le tube de direction (2) solidaire du cadre (20) par exemple, à l'aide d'un jeu de cales coniques (30) serrées par l'écrou (29). Une variante encore plus économique intègre la châssis (27) et le tube (21) au cadre (20) lors de l'assemblage de ce dernier.

Les organes (22, 23, 24, 25, 28) permettant la sélection de l'une ou de l'autre géométrie de la direction ne sont plus nécessaires. Seuls subsistent le châssis (27), le corps (26) et l'axe (13) du pivot vertical d'articulation entre les deux sections du tandem.

Quels qu'en soient les modes de réalisation, l'invention permet avec des moyens simples, économiques et ne nécessitant aucun réglage, de modifier de manière réversible la géométrie de la direction d'une bicyclette, assurant ainsi la stabilité dynamique d'un tandem à trois roues lorsque ladite bicyclette est utilisée en tant que section arrière de ce tandem, une version simplifiée de ces moyens la dédiant spécifiquement à cet usage.

Glossaire des désignations correspondant aux repères mentionnés dans les figures:
- (1): Axe de la roue arrière d'une bicyclette ou de la roue centrale du tandem.
- (2): Tube de direction d'une bicyclette.
- (3): Axe de direction d'une bicyclette traditionnelle.
- (4): Plan du sol ou de roulement des bicyclettes.
- (5): Angle de direction d'une bicyclette traditionnelle.
- (6): Chasse d'une bicyclette traditionnelle.
- (7): Déport d'une bicyclette traditionnelle.
- (8): Sens de déplacement de la bicyclette ou du tandem.
- (9): Trajectoire du tandem en virage à droite.
- (10): Angle de virage du tandem.
- (11): Génératrice d'un tronc de cône représentant l'évolution dans l'espace du tube de direction d'une bicyclette traditionnelle utilisée en tant que section arrière d'un tandem, celui-ci étant en virage.
- (12): Tête de fourche.
- (13): Axe du pivot d'articulation supplémentaire.
- (14): Angle de direction du pivot d'articulation supplémentaire.
- (15): Déport de l'axe du pivot supplémentaire par rapport à l'axe de la roue centrale du tandem.
- (16): Axe de la roue avant d'une bicyclette.
- (17): Cadre de la bicyclette formant la section avant du tandem.
- (18): Bras de fourche.
- (19): Ligne du plan de roulement de la section arrière du tandem.
- (20): Cadre de la bicyclette formant la section arrière du tandem.
- (21): Tube de fourche.
- (22): Organe déplaçable dans le châssis.
- (23): Gâche du corps de pivot.
- (24): Gâche intégrée au tube de direction ou dans une bague (25) rapportée sur ce tube.
- (25): Bague incluant la gâche (24) et solidaire du tube de direction.
- (26): Corps du pivot d'articulation supplémentaire.
- (27): Châssis.
- (28): Bouton de manoeuvre indexé.
- (29): Ecrou de serrage du montage de roulements ou du jeu de cales dans le tube de direction.
- (30): Cales coniques d'immobilisation du tube de fourche par rapport au tube de direction.

## Revendications

1. Ensemble comprenant une fourche support de la roue avant d'une bicyclette et un dispositif de liaison de la fourche au cadre de la bicyclette, **caractérisé en ce que** le dispositif de liaison comporte :
un premier pivot (21), ou colonne de direction, pour l'utilisation de la bicyclette de façon indépendante d'une autre bicyclette, l'axe de ce premier pivot constituant l'axe de rotation du guidon de la bicyclette,
un second pivot (13) dont l'axe a une direction distincte de la direction de l'axe du premier pivot et qui est mis en action quand la fourche est associée à la roue arrière d'une autre bicyclette, et
des moyens (22, 23, 24, 28) pour, d'une part, empêcher la rotation du second pivot quand la bicyclette est utilisée indépendamment d'une autre bicyclette et pour, d'autre part, empêcher la rotation du premier pivot quand la fourche est associée à la roue arrière d'une autre bicyclette.

2. Ensemble selon la revendication 1, **caractérisé en ce que** l'axe du second pivot est sensiblement vertical.

3. Ensemble selon la revendication 1 ou 2, **caractérisé en ce que** l'axe du premier pivot forme un angle d'environ 70 degrés avec la direction horizontale.

4. Ensemble selon l'une des revendications 1 à 3, **caractérisé en ce que** les moyens pour empêcher la rotation du premier pivot ou du second pivot comportent une came ou un pêne susceptible de prendre deux positions, la première pour empêcher la rotation du premier pivot et la seconde pour empêcher la rotation du second pivot.

5. Ensemble selon la revendication 4, **caractérisé en ce que** la came (22) ou le pêne, est solidaire d'un organe (27) fixé au premier pivot et formant palier pour le second pivot, et **en ce que** cette came ou ce pêne coopère avec des ouvertures ou gâches prévues, d'une part, dans un élément solidaire du palier du premier pivot et, d'autre part, dans un élément solidaire du second pivot.

6. Ensemble selon la revendication 4 ou 5, **caractérisé en ce que** les deux positions de la came forment entre elles un angle d'environ 180 degrés.

7. Ensemble selon l'une des revendications 4 à 6, **caractérisé en ce qu'**il comprend pour commander la position de la came ou du pêne un élément de commande (28) ou sélecteur présentant deux positions indexées.

8. Bicyclette comprenant un ensemble selon l'une des revendications précédentes.

9. Appareil de locomotion du type tandem à trois roues comprenant une bicyclette avant et une bicyclette arrière conforme à la revendication 8 mais dépourvue de roue avant.
